# EUROPÄISCHE PATENTSCHRIFT

(11) **EP 1 649 611 B1**
(45) Veröffentlichungstag und Bekanntmachung des Hinweises auf die Patenterteilung: **18.10.2006**
(21) Anmeldenummer: 04740448.8
(22) Anmeldetag: 30.06.2004
(51) Int. Cl.: H04B 3/56

(54) **MESSADAPTER ZUR NACHBILDUNG EINES MIT EINER POWERLINE-DATEN BERTRAGUNGSEINRICHTUNG GEKOPPELTEN NIEDERSPANNUNGS-STROMNETZES**
MEASURING ADAPTER FOR SIMULATING A LOW-VOLTAGE NETWORK THAT IS COUPLED TO A POWERLINE DATA TRANSMISSION DEVICE
ADAPTATEUR DE MESURE POUR LA SIMULATION D'UN RESEAU BASSE TENSION COUPLE A UN DISPOSITIF DE TRANSMISSION DE DONNEES PAR COURANTS PORTEURS EN LIGNE

(30) Priorität: 17.07.2003 DE 10332756
(43) Veröffentlichungstag der Anmeldung: 26.04.2006
(73) Patentinhaber: Power Plus Communications AG, 68163 Mannheim (DE)
(72) Erfinder: HAMM, Stephan, 68519 Viernheim (DE); HIRSCH, Holger, 59199 Bönen (DE)
(74) Vertreter: Kesselhut, Wolf
(86) Internationale Anmeldenummer: PCT/EP2004/007065
(87) Internationale Veröffentlichungsnummer: WO 2005/018105

(56) Entgegenhaltungen:
- WO-A-02/05451
- US-A1- 2003 095 036

## Beschreibung

Die Erfindung betrifft einen Messadapter zur Nachbildung eines mit einer Powerline-Datenübertragungseinrichtung gekoppelten Niederspannungs-Stromnetzes gemäß dem Oberbegriff von Anspruch 1.

Auf dem Gebiet der Telekommunikation werden heutzutage für die Übertragung von elektronischen Daten zwischen Rechnern, beispielsweise im Bereich des Internets, neben speziell für diese Zwecke ausgebildeten herkömmlichen Datenleitungen in zunehmendem Maße die Leitungen des öffentlichen Stromnetzes verwendet.

Bei dieser in Fachkreisen als "Powerline" System oder "Powerline Communications" (PLC) bezeichneten Technologie werden Datensignale neben der üblichen 50 Hz Spannung auf Stromleitungen als Hochfrequenzsignale aufmoduliert. Hierbei liegen die Pegel der verwendeten Signalspannungen in der Regel im Bereich von weniger als einem Volt und weisen Frequenzen im Bereich von 1,5 bis 30 MHz auf.

Die Verbindung zwischen Geräten des Powerline-Systems, die in einem vermaschten Stromnetz angeschlossen sind, erfolgt dabei nach den Prinzipien eines Datennetzes mit einem Bus als Medium. Da die hochfrequenten Signale mit zunehmender Entfernung mehr und mehr gedämpft werden, ist der Einsatz von Zwischenverstärkern erforderlich, die in Fachkreisen auch als "Repeater" bezeichnet werden. Die Zwischenverstärker werden dabei an Verteilervorrichtungen des sogenannten Niederspannungs-Stromnetzes mit Spannungen von ca. 230 V, wie z.B. Trafostationen, Straßenverteilern oder Hausanschlusskästen angebracht. Sie greifen die hochfrequenten Signale - nachfolgend als Hochfrequenzsignale bezeichnet - von den Leitungen ab, verstärken diese selektiv und koppeln die verstärkten Hochfrequenzsignale anschließend wieder auf die Leitung.

Neben den Repeatern werden zur Einspeisung der Powerline-Datensignale in das Niederspannungsstromnetz zudem sogenannte "Central Units" (CU), und zur Auskopplung der Daten, bzw. zum Abschluß eines Netzwerks sogenannte "Network terminations" (NT) eingesetzt.

Bei der Erschließung neuer Straßenzüge oder Stadtteile, in denen die bestehenden Niederspannungs-Stromnetze mit der Powerline-Technologie versehen werden sollen, besteht das Problem, dass sich das Verhalten eines jeweiligen Niederspannungs-Stromnetzes aufgrund der unterschiedlichen elektrischen Kenngrößen der angeschlossenen Verbraucher, der im Netz installierten Powerline-Datenübertragungseinrichtungen sowie der Ausgestaltung des Netzes selbst, nur schwer vorherbestimmen lässt, was dazu führen kann, dass die Übertragung der hochfrequenten Powerline-Datensignale über das Netz mitunter Störungen unterliegen kann.

So ist beispielsweise aus der DE 101 54 697 A1 eine elektronische Schaltung bekannt, mit welcher die elektromagnetische Störstrahlung einer Powerline-Datenübertragungseinrichtung zur Datenübertragung in einem öffentlichen Stromnetz bestimmt werden kann.

Das Niederspannungs-Stromnetz ist hierbei über ein Entkoppelungsglied zur Entkoppelung der hochfrequenten Datensignale mit einer an einer Steckdose an das Impedanzstabilisierungsnetzwerk angeschlossenen Powerline-Datenübertragungseinrichtung verbunden, wobei ein über ein Auskoppelteil mit dem Impedanzstabilisierungsnetzwerk verbundener Messempfänger die elektro-magnetische Störstrahlung bestimmt. Die beschriebene Schaltung eignet sich nicht dazu, mehrere Geräte daran anzuschließen.

In gleicher Weise ist es in der Praxis aufwendig, die in einem realen Niederspannungs-Stromnetzwerk auftreten elektrischen Zustände, Störsignale etc. zu simulieren, die beispielsweise durch das Ein- und Ausschalten von Verbrauchern entstehen, um die Powerline-Datenübertragungseinrichtungen im Rahmen der Produktentwicklung zu testen und im Hinblick auf einen möglichst störungsfreien Betrieb zu optimieren.

Dem gemäß ist es eine Aufgabe der vorliegenden Erfindung, einen Messadapter zu schaffen, mit dem sich das Verhalten eines mit einer oder mehreren Powerline-Datenübertragungseinrichtunger gekoppelten Niederspannungs-Stromnetzes auf einfache Weise und kostengünstig unter Laborbedingungen nachbilden lässt.

Diese Aufgabe wird erfindungsgemäß durch die Merkmale von Anspruch 1 gelöst.

Weitere Merkmale der Erfindung sind in den Unteransprüchen enthalten.

Gemäß der Erfindung umfasst ein Messadapter zur Nachbildung eines mit einer Powerline-Datenübertragungseinrichtung - insbesondere mit einem Modem, einer Central Unit oder einem Repeater - gekoppelten Niederspannung -Stromnetzes einen mit einer Stromquelle verbindbaren Signalfilter, welcher die von der Stromquelle übertragenen Störsignale unterdrückt, beziehungsweise sehr stark dämpft. Ebenso werden auf dem Niederspannungs-Stromnetz laufende Signale anderer Powerline-Datenübertragungseinrichtungen gedämpft, so dass der erfindungsgemäße Messadapter oder die erfindungsgemäße Messanordnung autark ohne den Einfluss von zufällig über das Niederspannungsstromnetz eingespeiste Hochfrequenzsignale betrieben werden kann. Die Dämpfung kann hierbei beispielsweise im Bereich von 70 dB liegen.

Der Signalfilter ist vorzugsweise über eine oder mehrere Induktivitäten, beispielweise Spulen, die z. B. eine Induktivität von 68 µH oder bzw. 220 µH aufweisen, mit einem bekannten Schuko-Steckanschluß, d. h. einer bekannten Steckdose verbunden, in die der Netzstecker einer zu untersuchenden Powerhe-Datenübertragungseinrichtung eingesteckt werden kann.

Der erfindungsgemäße Messadapter umfasst weiterhin eine Auskoppeleinheit, die in erfindungsgemäßer Weise mit einer Steckbuchse sowie vorzugsweise ebenfalls mit einer weiteren Steckbuchse verbunden ist. Die Steckbuchse und die weitere Steckbuchse sind hierbei bevorzugt BNC-Steckbuchsen, können jedoch auch Steckbuchsen bekannter anderer Stecksysteme, z.B SMA oder Serie-N oder dergleichen, sein. Zum einfacheren Verständnis wird die Erfindung jedoch nachfolgend am Beispiel eines BNC-Stecksystems beschrieben.

Bei der bevorzugten Ausführungsform der Erfindung enthält die Auskoppeleinheit einen im Stand der Technik bekannten Übertrager, vorzugsweise einen balanced/unbalanced BALUN-Übertrager der die auf vorzugsweise 230 Volt/50 Hertz Wechselspannung der Stromquelle über die angeschlossene Powerline-Datenübertragungseinrichtung aufmodulierten Hochfrequenzsignale zur BNC-Buchse, beziehungsweise zur weiteren BNC-Buchse überträgt. Der BALUN-Übertrager ist hierbei vorzugsweise um 90 ° gedreht eingebaut, wodurch der Übertrager gegenüber einem Isolationstrafo weitgehend unabhängig von der Güte des Kernmaterials arbeitet und eine bessere Gleichtaktkopplung aufweist.

Die BNC-Buchse sowie die weitere BNC-Buchse sind hierbei über eine vorzugsweise durch ohmsche Widerstände gebildete Anpassschaltung mit dem Übertrager verbunden, um die durch die BNC-Buchsen gebildeten Anschlüsse des erfindungsgemäßen Messadapters an die für BNC-Komponenten charakteristischen Anschlusswerte, insbesondere für die Impedanz, anzupassen.

Gemäß einer weiteren Ausführungsform der Erfindung enthält die Auskoppeleinheit einen ersten und zweiten Koppelkondensator, der entsprechend zwischen den Steckkontakten des Steckanschlusses für die Powerline-Datenübertragungseinrichtung und den zugehörigen Eingangskontakten des Übertragers angeordnet ist. Die Koppelkondensatoren besitzen jeweils vorzugsweise eine Kapazität von 68 nF, können jedoch auch eine andere Kapazität aufweisen.

Weiterhin kann es zum Schutz des erfindungsgemäßen Messadapters vorgesehen sein, dass zwischen dem Netzstecker und dem Signalfilter eine, vorzugsweise jedoch sogar zwei Sicherungen vorgesehen sind, die beispielsweise als Schmelzsicherungen ausgebildet sein können.

Bei dem Signalfilter handelt es sich um ein selektives Filter, der im Bereich der Übertragungsfrequenzen von Powerline-Datenübertragungseinrichtungen, d.h. im Frequenzbereich zwischen 1,5 und 30 Megahertz, auftretende Störsignale aus der 230 Volt/50Hertz Wechselspannung der Stromquelle herausfiltert.

Der erfindungsgemäße Messadapter besitzt den Vorteil, dass durch Aufstecken von Standard BNC-Dämpfungsgliedern, die Dämpfung des Niederspannungs-Stromnetzes auf sehr kostengünstige Weise und in kürzester Zeit verändert werden kann, um ein beispielsweise im Bereich eines Straßenzuges bestehendes Niederspannungs-Stromnetz nachzubilden. Hierbei können beispielsweise auch gezielt durch einen Signalgenerator erzeugte Störsignale einer gewünschten Frequenz und Amplitude sowie Amplitudenform eingespeist werden, um das Verhalten der angeschlossenen Powerline-Datenübertragungseinrichtung, beispielsweise eines Powerline-Modems, auf die Störsignale zu analysieren. Die Einkopplung der Signale kann hierbei in vorteilhafter Weise ebenfalls über die BNC-Steckbuchse, bzw. im Falle einer Kaskadenschaltung über die freie - üblicher Weise durch einen 50 Ohm Widerstand abgeschlossene - weitere Steckbuchse des letzten Adapters der Kaskade, oder aber über einen bekannten 6dB Koppler erfolgen.

Zudem besteht die Möglichkeit, neben frequenzunabhängigen Filtern in Form von einfachen Dämpfungsgliedern, gewünschten Falls bei speziellen Strecken durch den Einsatz von entsprechenden auf die BNC-Buchse aufzusteckenden Filtern eine frequenzabhängige Übertragungsfunktion nachzubilden.

Gemäß der bevorzugten Ausführungsform der Erfindung besitzt jeder Messadapter vorzugsweise eine BNC-Buchse sowie eine weitere BNC-Buchse, wobei zwei oder mehrere Messadapter über die BNC-Buchsen durch übliche geschirmte Kabel, insbesondere Standart-Koaxialkabel, kaskadenartig miteinander verbunden werden, um ein Niederspannungs-Stromnetz nachzubilden.

Die Messadapter sind hierbei analog zu den Netzknoten, wie Trafostationen, Straßenverteilern, Hausanschlusskästen, sowie Kunden-Schuko-Steckdosen im Niederspannungsnetz angeordnet, wobei an die Steckanschlüsse der jeweiligen Adapter mehrere identische oder auch unterschiedliche Powerline-Datenübertragungseinrichtungen, beispielsweise Repeater, Central Units oder auch Netzwerkabschlüsse (network terminations) angeschlossen werden können, je nach Testzweck und Typ des jeweiligen Gerätes.

Durch die Verbindung mehrerer erfindungsgemäßer Messadapter durch Standart-Koaxialkabel ergibt sich der Vorteil, dass durch von außen eingestrahlte Störstrahlung aufgrund der standartmäßig vorhandenen Schinnung der verwendeten Kabel keine ungewollten Störsignale in die Messadapter eindringen können, wobei es insbesondere von Vorteil ist, wenn die Messadapter jeweils ein nach außen abgeschirmtes Gehäuse, beispielsweise ein von innen ausgekleidetes und außen isoliertes Metallgehäuse, besitzen.

Demgemäß lässt sich durch kaskadenförmiges Zusammenstecken einer Vielzahl erfindungsgemäßer Messadapter mittels handelsüblicher Koaxialkabel in kürzester Zeit eine Messanordnung aufbauen, mit der sich die gegenseitige elektrische Beeinflussung eines bestehenden realen Netzwerks mit zu installierenden Powerline-Datenübertragungseinrichtungen, als auch die gegenseitige Beeinflussung der Powerline-Datenübertragungseinrichtungen untereinander innerhalb eines realen Netzwerks unter wohldefinierten Bedingungen im Labor untersuchen lässt.

Sofern zwei oder mehrere Messadapter zu einer entsprechenden Messanordnung zur Nachbildung des Niederspannungs-Stromnetzes über Koaxialkabel zusammengeschlossen werden, werden die weiteren BNC-Buchsen des ersten und letzten Messadapters mit einem Standart 50 Ohm Abschlusswiderstand abgeschlossen, der hierzu auf einfache Weise in die entsprechende freie BNC-Buchse des ersten, bzw. letzten Messadapters eingesteckt wird. Hierdurch lässt sich das im Labor simulierte Netzwerk durch Anstecken weiterer Messadapter mit entsprechenden BNC-Dämpfungsgliedem- und Koaxialkabel in kürzester Zeit erweitern.

Die Erfindung wird nachfolgend mit Bezug auf die Zeichnungen anhand einer bevorzugten Ausführungsform beschrieben.

In den Zeichnungen zeigen:
- Fig. 1: eine schematische Darstellung eines erfindungsgemäßen Messadapters zur Verdeutlichung der Position der Schutzsicherungen, BNC-Steckbuchsen und des als Schuko-Steckdose ausgebildeten Steckanschlusses für die Powerline-Datenübertragungseinrichtung.
- Fig. 2: eine schematische Darstellung des Schaltplans der im erfindungsgemäßen Messadapter verwendeten elektronischen Bauteile, und
- Fig. 3: eine Messanordnung bestehend aus drei erfindungsgemäßen Messadaptern, die über zugehörige Standart-Koaxialkabel zur Nachbildung eines Niederspannungs-Stromnetzwerks miteinander verbunden sind.

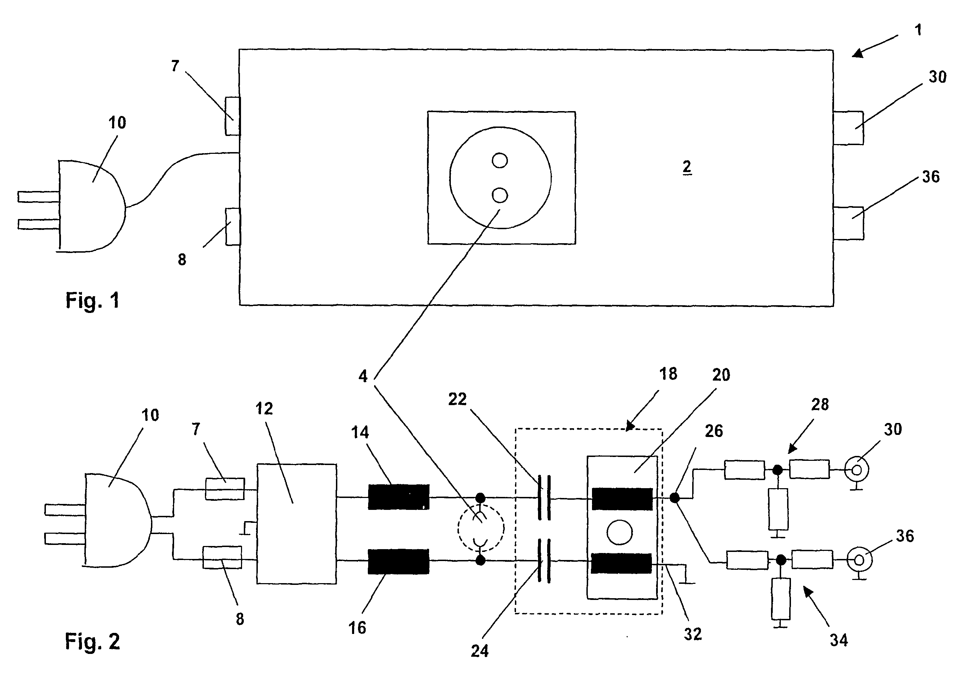

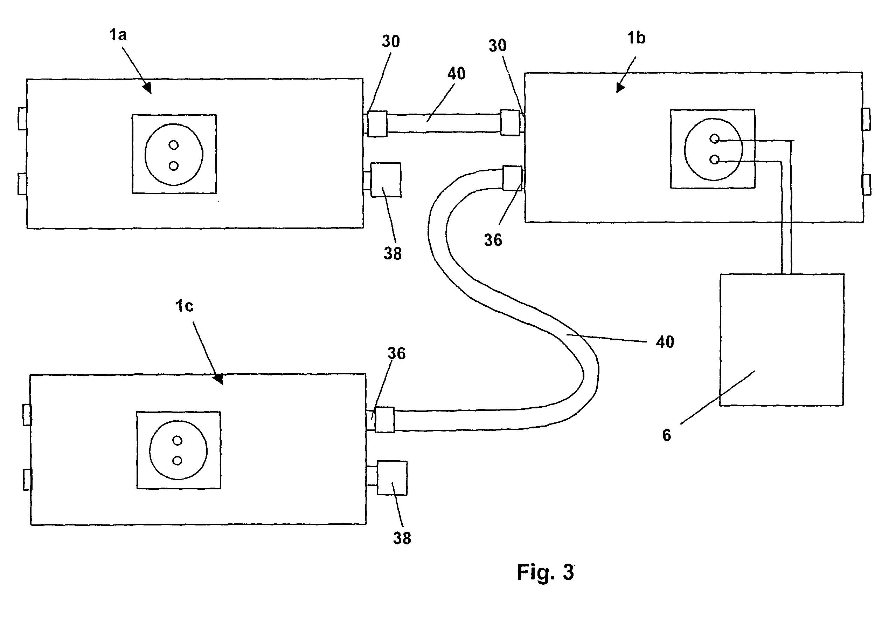

Wie in Fig. 1 und 2 gezeigt ist, umfasst ein erfindungsgemäßer Messadapter 1 ein Gehäuse 2, in dessen Oberseite ein Steckanschluss in Form einer Schuko-Steckdose 4 angeordnet ist, in die der zugehörige Netzstecker einer in Fig. 3 gezeigten Powerline-Datenübertragungseinrichtung 6 einsteckbar ist.

Am Gehäuse 2 sind weiterhin eine erste und zweite Sicherung 7, 8 angeordnet, welche die zugehörigen Zuleitungen zu einem Netzstecker 10 absichern, über den der erfindungsgemäße Messadapter 1 mit einer Stromquelle, vorzugsweise mit einer bekannten Steckdose des 23o Volt/50 Hertz Niederspannungs-Stromnetzes zur Stromversorgung des Messadapters verbunden werden kann. Der Adapter kann jedoch auch an anderen Spannungen, z.B. dem amerikanischen 115 V Niederspannungs-Stromnetz, betrieben werden.

Gemäß der Darstellung von Fig. 2 ist der Netzstecker 10 über die beiden Sicherungen 7, 8 mit einem Signalfilter 12 verbunden, welcher die über das Niederspannungs-Stromnetz eingespeisten hochfrequenten Störsignale aus der 230 Volt/50Hertz Wechselspannung ausfiltert, bzw. diese sehr stark dämpft. In gleicher Weise sorgt der Signalfilter 12 dafür, dass die über die Schuko-Steckdose 4 durch die zu untersuchende Powerline-Datenübertragungseinrichtung 6 in den Messadapter 1 eingespeisten Hochfrequenz-Datensignale nicht in umgekehrter Richtung in das Niederspannungs-Stromnetz gelangen, und dort beispielsweise andere Verbraucher nachteilig beeinflussen.

Der Signalfilter 12 ist vorzugsweise ein bekanntes Standart-Bauteil, welches Hochfrequenzsignale im Bereich zwischen 1,5 Megahertz und 30 Megahertz herausfiltert, wobei die Dämpfung beispielsweise bei 70dB liegen kann.

Der Ausgang des Signalfilters 12 ist über Induktivitäten in Form von einer ersten und zweiten Spule 14, 16 mit den Kontakten der Schuko-Steckdose 4 verbunden, wobei die erste und zweite Spule auch jeweils durch mehrere in Reihe geschaltete Spulen ersetzt werden kann, beispielsweise durch zwei Spulen mit einer Induktivität von 68 und 220 µH. In gleicher Weise ist es denkbar, eine einzelne Spule mit geeigneten Hochfrequenzeigenschaften zu verwenden

Wie der Darstellung von Fig. 2 weiterhin entnommen werden kann, sind die Kontakte der Schuko-Steckdose 4 mit einer Auskoppeleinheit 18 verbunden, die einen Übertrager 20 sowie einen ersten und zweiten, zwischen dem Übertrager 20 und der Schuko-Steckdose 4 angeordneten Koppelkondensator 22, 24 enthält. Die Auskoppeleinheit 18 trennt hierbei die Hochfrequenzsignale, die durch die Powerline-Datenübertragungseinrichtung 6 über die Schuko-Steckdose 4 in den Messadapter 1 eingekoppelt werden, von der 230Volt/50Hertz Netzspannung der Stromquelle.

Gemäß der Darstellung von Fig. 2 ist der Übertrager 20 vorzugsweise als ein balanced/unbalanced Übertrager ausgestaltet, dessen erster ausgangsseitiger Anschluss 26 über eine erste Anpassungsschaltung 28 in Form von 3 sternförmig miteinander verbundenen, nicht näher bezeichneten ohmschen Widerständen mit einer BNC-Buchse 30 verbunden ist. Neben einer sternförmigen Verschaltung ist auch eine andere Verschaltungen der Widerstände denkbar, z.B. eine Dreiecksschaltung etc.

Der zweite ausgangsseitige Anschluss 32 des Übertragers 20 ist demgegenüber mit Masse, beziehungsweise Erdpotential verbunden.

Wie der Darstellung von Fig.2 weiterhin entnommen werden kann, ist der erste ausgangseitige Anschluss 26 über eine weitere Anpassungsschaltung 34 in Form von 3 nicht näher bezeichneten sternförmig miteinander verbundenen ohmschen Widerständen mit einer weiteren BNC-Buchse 36 verbunden, die in gleicher Weise wie die BNC-Buchse 30 von außen her zugänglich am Gehäuse 2 des erfindungsgemäßen Messadapters 1 angebracht ist.

Gemäß der Darstellung von Fig. 3 können auf die erste BNC-Buchse 30, beziehungsweise auf die weitere BNC-Buchse 36 bekannte BNC-Dämpfungsglieder 38 mit einem für ein nachzubildendes Niederspannungs-Stromnetzwerk charakteristischen elektrischen Kennwert, bzw. Koaxialkabel 40 aufgesteckt werden, um eine kaskadenförmige Aneinanderreihung von beliebig vielen Messadaptern 1, beispielsweise von drei in Fig. 3 gezeigten Messadaptern 1a, 1b und 1c, zu erhalten, welche jeweils einem Netzknoten wie einer Trafostation einem Straßenverteiler, einem Hausanschlusskasten oder einer Kundenschukosteckdose des nachzubildenden Niederspannungs-Stromnetzes entsprechen.

Die hierbei nicht benötigten weiteren BNC - Buchsen 38 des ersten Messadapters 1a und des dritten Messadapters 1c der in Fig. 3 gezeigten Netzwerknachbildung werden dabei durch 50 Ohm BNC-Widerstände abgeschlossen.

Bei der Darstellung von Fig.3 wurde aus darstellungstechnischen Gründen lediglich am zweiten Messadapter 1b eine Powerline-Datenübertragungseinrichtung 6 angeschlossen, und zudem wurden die Anschlussleitungen mit zugehörigen Netzsteckern 10 zur Stromversorgung des Messadapter 1a, 1b und 1c nicht mit eingezeichnet.

### Liste der Bezugszeichen

- 1: erfindungsgemäßer Messadapter
- 1a: erster Messadapter in Fig. 3
- 1b: zweiter Messadapter in Fig. 3
- 1b: dritter Messadapter in Fig. 3
- 2: Gehäuse
- 4: Schuko-Steckdose
- 6: Powerline-Datenübertragunaseinrichtung
- 7: erste Sicherung
- 8: zweite Sicherung
- 10: Netzstecker
- 12: Signalfilter
- 14: erste Spule
- 16: zweite Spule
- 18: Auskoppeleinheit
- 20: Übertrager
- 22: erster Koppelkondensator
- 24: zweiter Koppelkondensator
- 26: erster ausgangsseitiger Anschluss des Übertragers
- 28: erste Anpassungsschaltung
- 30: BNC-Buchse
- 32: zweiter ausgangsseitiger Anschluss des Übertragers
- 34: zweite Anpassungsschaltung
- 36: weitere BNC-Buchse
- 38: BNC-Dämpfungselement
- 40: Koaxialkabel

## Patentansprüche

1. Messadapter zur Bestimmung des Verhaltens einer oder mehrerer PowerlineDatenübertragungseinrichtungen (6) in einem Niederspannungs-Stromnetz, mit einem mit einer Stromquelle verbindbaren Signalfilter (12) zur Unterdrückung von durch die Stromquelle übertragenen Störsignalen, einem mit dem Signalfilter (12) gekoppelten Steckanschluss (4) zum Anschluss einer Powerline-Datenübertragungseinrichtung (6), **dadurch gekennzeichnet, dass** der Messadapter eine eingangsseitig mit dem Steckanschluss (4) und ausgangsseitig mit einer Steckbuchse (30) verbundene Auskoppeleinheit (18) zur Übertragung von durch die Powerline-Datenübertragungseinrichtung (6) über den Steckanschluss (4) zugeführten Hochfrequenzsignalen zur Buchse (30) aufweist, wobei der Messadapter über eine Steckbuchse (30) und ein geschirmtes Kabel (40) mit weiteren Messadaptern zur Nachbildung des Niederspannungsnetzwerkes verbindbar ist.

2. Messadapter nach Anspruch 1,
**dadurch gekennzeichnet,**
**dass** die Auskoppeleinheit (18) einen Übertrager (20) umfasst.

3. Messadapter nach Anspruch 2,
**dadurch gekennzeichnet,**
**dass** der Übertrager (20) ein 1:1 Übertrager ist.

4. Messadapter nach einem der vorhergehenden Ansprüche,
**dadurch gekennzeichnet,**
**dass** die Auskoppeleinheit (18) einen ersten und zweiten Koppelkondensator (22,24) zur galvanischen Trennung des Steckanschlusses (4) von der Steckbuchse (30) umfasst.

5. Messadapter nach einem der vorhergehenden Ansprüche,
**dadurch gekennzeichnet,**
**dass** die Auskoppeleinheit (18) mit der Steckbuchse (30) über eine Anpassungsschaltung (28) verbunden ist.

6. Messadapter nach einem der vorhergehenden Ansprüche,
**dadurch gekennzeichnet,**
**dass** die Auskoppeleinheit (18) mit einer weiteren Steckbuchse (36) zum Anschluss eines Widerstandes (38) und/oder eines Dämpfungsgliedes (38) und/oder eines Abschlusswiderstandes (38) und/oder eines frequenzabhängigen Filters verbunden ist.

7. Messadapter nach einem der vorhergehenden Ansprüche,
**dadurch gekennzeichnet,**
**dass** die Stromquelle ein 230V Netzanschluss des öffentlichen Stromnetzes ist.

8. Messanordnung zur Bestimmung des Verhaltens einer ersten und zweiten Powerline-Datenübertragungseinrichtung (6) in einem Niederspannungs-Stromnetz, umfassend einen ersten und zweiten Messadapter (1a, 1b) nach einem der vorhergehenden Ansprüche,
**dadurch gekennzeichnet,**
**dass** die Steckbuchsen (30) des ersten und zweiten Messadapters (1a, 1b) über ein geschirmtes Kabel (40) miteinander verbunden sind, und dass die erste Powerline-Datenübertragungseinrichtung (6) mit dem Steckanschluss(4) des ersten Messadapters (1a) und die zweite Powerline-Datenübertragungseinrichtung (6) mit dem Steckanschluss (4) des zweiten Messadapters (1b) verbunden ist.

9. Messanordnung nach Anspruch 8 und 6,
**dadurch gekennzeichnet,**
**dass** der zweite Messadapter (1b) eine weitere Steckbuchse (36) aufweist, und dass die Messanordnung einen dritten Messadapter (1c) umfasst, dessen Steckbuchse mit der weiteren Steckbuchse (36) des zweiten Messadapters (1b) über ein geschirmtes Kabel (40) verbunden ist.

10. Messanordnung nach Anspruch 9,
**dadurch gekennzeichnet,**
**dass** der Steckanschluss (4) des dritten Messadapters (1c) mit einer dritten Powerline-Datenübertragungseinrichtung (6) verbunden ist.

## Claims

1. Measuring adaptor for determining the behaviour of one or more powerline data transmission means (6) in a low-voltage network, having a signal filter (12) which can be connected to a power source for suppressing interfering signals transmitted by the power source and having a plug-in connection coupled to the signal filter (12) for connecting a powerline data transmission means (6), **characterised in that** the measuring adaptor has a decoupling unit (18), connected on the input side to the plug-in connection (4) and on the output side to a socket (30), for transmitting high-frequency signals supplied by the powerline data transmission means (6) to the socket (30) via the plug-in connection (4), the measuring adaptor being connectable to further measuring adaptors via a socket (30) and a shielded cable (40) for simulating the low-voltage network.

2. Measuring adaptor according to claim 1, **characterised in that** the decoupling unit (18) comprises a transformer (20).

3. Measuring adaptor according to claim 2, **characterised in that** the transformer (20) is a 1 : 1 transformer.

4. Measuring adaptor according to any one of the preceding claims, **characterised in that** the decoupling unit (18) comprises a first and a second coupling capacitor (22, 24) for electrically isolating the plug-in connection (4) from the socket (30).

5. Measuring adaptor according to any one of the preceding claims, **characterised in that** the decoupling unit (18) is connected to the socket (30) via a matching circuit (28).

6. Measuring adaptor according to any one of the preceding claims, **characterised in that** the decoupling unit (18) is connected to a further socket (36) for connecting a resistor (38) and/or an attenuator (38) and/or a terminating resistor (38) and/or a frequency-dependent filter.

7. Measuring adaptor according to any one of the preceding claims, **characterised in that** the power source is a 230 V mains power supply.

8. Measuring assembly for determining the behaviour of a first and a second powerline data transmission means (6) in a low-voltage network, comprising a first and a second measuring adaptor (1a, 1b) according to any one of the preceding claims, **characterised in that** the sockets (30) of the first and second measuring adaptors (1a, 1b) are mutually connected via a shielded cable (40) and **in that** the first powerline data transmission means (6) is connected to the plug-in connection (4) of the first measuring adaptor (1a) and the second powerline data transmission means (6) is connected to the plug-in connection (4) of the second measuring adaptor (1b).

9. Measuring assembly according to claims 8 and 6, **characterised in that** the second measuring adaptor (1b) has a further socket (36) and **in that** the measuring assembly comprises a third measuring adaptor (1c), the socket of which is connected to the further socket (36) of the second measuring adaptor (1b) via a shielded cable (40).

10. Measuring assembly according to claim 9, **characterised in that** the plug-in connection (4) of the third measuring adaptor (1c) is connected to a third powerline data transmission means (6).

## Revendications

1. Adaptateur de mesure pour la détermination du comportement d'un ou de plusieurs dispositifs de transmission de données par courants porteurs en ligne (6) dans un réseau de courant à basse tension, comprenant un filtre de signal (12) raccordable à une source de courant pour la suppression de signaux perturbateurs transmis par la source de courant, un raccordement à fiches (4) couplé au filtre de signal (12) pour le raccordement d'un dispositif de transmission de données par courants porteurs en ligne (6), **caractérisé en ce que** l'adaptateur de mesure présente une unité de découplage (18), raccordée côté entrée au raccordement à fiches (4) et côté sortie à une prise femelle (30), pour la transmission de signaux à haute fréquence, amenés par le dispositif de transmission de données par courants porteurs en ligne (6) via le raccordement à fiches (4), à la prise femelle (30), l'adaptateur de mesure étant raccordable à d'autres adaptateurs de mesure par l'intermédiaire d'une prise femelle (30) et d'un câble blindé (40) pour la simulation du réseau de basse tension.

2. Adaptateur de mesure selon la revendication 1,
**caractérisé en ce**
**que** l'unité de découplage (18) comprend un transformateur (20).

3. Adaptateur de mesure selon la revendication 2,
**caractérisé en ce**
**que** le transformateur (20) est un transformateur 1 :1.

4. Adaptateur de mesure selon l'une quelconque des revendications précédentes,
**caractérisé en ce**
**que** l'unité de découplage (18) comprend un premier et un deuxième condensateurs de couplage (22, 24) pour la séparation galvanique du raccordement à fiche (4) de la prise femelle (30).

5. Adaptateur de mesure selon l'une quelconque des revendications précédentes,
**caractérisé en ce**
**que** l'unité de découplage (18) est raccordée à la prise femelle (30) par l'intermédiaire d'un montage adaptateur (28).

6. Adaptateur de mesure selon l'une quelconque des revendications précédentes,
**caractérisé en ce**
**que** l'unité de découplage (18) est raccordée à une autre prise femelle (36) pour le raccordement d'une résistance (38) et/ou d'un atténuateur (38) et/ou d'une résistance terminale (38) et/ou d'un filtre dépendant de la fréquence.

7. Adaptateur de mesure selon l'une quelconque des revendications précédentes,
**caractérisé en ce**
**que** la source de courant est un branchement au secteur de 230 V du réseau de courant public.

8. Dispositif de mesure pour la détermination du comportement d'un ou de plusieurs dispositifs de transmission de données par courants porteurs en ligne (6) dans un réseau de courant à basse tension, comprenant un premier et un deuxième adaptateurs de mesure (1a, 1b), selon l'une quelconque des revendications précédentes,
**caractérisé en ce**
**que** les prises femelles (30) du premier et du deuxième adaptateur de mesure (1a, 1b) sont raccordées entre elles par l'intermédiaire d'un câble blindé (40), et en ce que le premier dispositif de transmission de données par courants porteurs en ligne (6) est raccordé au raccordement à fiches (4) du premier adaptateur de mesure (1a) et en ce que le deuxième dispositif de transmission de données par courants porteurs en ligne (6) est raccordé au raccordement à fiches (4) du deuxième adaptateur de mesure (1b).

9. Dispositif de mesure selon les revendications 8 et 6,
**caractérisé en ce**
**que** le deuxième adaptateur de mesure (1b) présente une autre prise femelle (36) et en ce que le dispositif de mesure comprend un troisième adaptateur de mesure (1c), dont la prise femelle est raccordée à l'autre prise femelle (36) du deuxième adaptateur de mesure (1b) par l'intermédiaire d'un câble blindé (40).

10. Dispositif de mesure selon la revendication 9,
**caractérisé en ce**
**que** le raccordement à fiches (4) du troisième adaptateur de mesure (1c) est raccordé à un troisième dispositif de transmission de données par courants porteurs en ligne (6).
